## Europäisches Patentamt
## European Patent Office
## Office européen des brevets

(19)

(11) Veröffentlichungsnummer : **0 189 050**
**B1**

(12) **EUROPÄISCHE PATENTSCHRIFT**

(45) Veröffentlichungstag der Patentschrift :
26.04.89

(51) Int. Cl.⁴ : **B 60 K 41/02**

(21) Anmeldenummer : 86100141.0

(22) Anmeldetag : 08.01.86

(54) Elektronische Einrichtung zur Steuerung einer Kraftfahrzeugschaltkupplung.

(30) Priorität : 23.01.85 DE 3502080

(43) Veröffentlichungstag der Anmeldung :
30.07.86 Patentblatt 86/31

(45) Bekanntmachung des Hinweises auf die Patenterteilung : 26.04.89 Patentblatt 89/17

(84) Benannte Vertragsstaaten :
DE FR GB SE

(56) Entgegenhaltungen :
EP--A-- 0 021 877
EP--A-- 0 130 792
GB--A-- 2 012 892
GB--A-- 2 066 919
US--A-- 3 645 366

(73) Patentinhaber : VDO Adolf Schindling AG
Gräfstrasse 103
D-6000 Frankfurt/Main 90 (DE)

(72) Erfinder : Levigion, Manfred
Glogauer Strasse 4
D-6233 Kelkheim (DE)

(74) Vertreter : Klein, Thomas, Dipl.-ing. (FH)
Sodener Strasse 9 Postfach 6140
D-6231 Schwalbach a. Ts. (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine elektronische Einrichtung zur Steuerung einer Kraftfahrzeugschaltkupplung nach dem Oberbegriff des Anspruchs 1.

Ein weiterer Aspekt der Erfindung betrifft eine elektronische Einrichtung zur Steuerung einer Kraftfahrzeugschaltkupplung nach dem Oberbegriff des Anspruchs 3.

Aus der US-A-3 645 366 ist eine elektronische Steuereinrichtung nach dem Oberbegriff des Anspruchs 1 bekannt, bei der zur Steuerung einer Schaltkupplung ein Rechner zur Anwendung kommt, welcher beim Einleiten einer Gangumschaltung des Wechselgetriebes die nach dem Umschalten des Getriebes zu erwartende Drehzahl der Kupplungsausgangswelle vorausberechnet. Diese vorausberechnete Drehzahl der Kupplungsausgangswelle wird mit der aktuellen Drehzahl der Kupplungsausgangswelle verglichen. Entsprechend dem Vergleichsergebnis wird die Drehzahl der Kupplungseingangswelle derart korrigiert, daß ein Einkuppeln bei möglichst gleicher Drehzahl beider Kupplungshälften stattfinden kann.

Nachteilig bei der bekannten Steuereinrichtung ist der erhöhte Aufwand für den Drehzahlvergleich. Auch ist das angestrebte ruckfreie Anfahren nicht gewährleistet.

Eine weitere bekannte Einrichtung zur Kupplungsbetätigung ist mit einer Elektronik aufgebaut, die über eine Leistungsendstufe einen Elektromotor als Kupplungs-Servoantrieb zur Betätigung einer herkömmlichen mechanischen Kupplung aufweist (VDI-Berichte Nr. 515, 1984 Seiten 75 bis 78). Mit der Einrichtung zur automatischen Kupplungsbetätigung soll der Elektromotor die Kupplung nach Möglichkeit genauso feinfühlig wie ein Fahrer bedienen. Hierzu werden als Signalgeber ein Motordrehzahlgeber, ein Fahrgeschwindigkeitsgeber, Schalthebelkontakte, ein Geber der Gangstellung des Schaltgetriebes und ein Gasstellungsgeber bzw. ein Gas-Sollwertgeber verwendet. Ein Teil dieser Geber kann auch zu einer bekannten Motorsteuerung oder Fahrgeschwindigkeitsregelung mitverwendet werden. Der Stellmotor kann die Kupplung von einem Auskuppelpunkt bis zu einem Einkuppelpunkt bei vollständig geschlossener Kupplung betätigen. Beim Anfahren erfolgt das Einkuppeln nach Art einer Fliehkraftkupplung über die Drehzahl. Nach einer maximalen Schleifzeit wird zeitgesteuert zwangseingekuppelt. Die Regelung des Einkuppelns beim Anfahren erfolgt in einem Bereich zwischen einem Grenzwert, bei dem das Fahrzeug in der Ebene noch nicht durch den Motor fortbewegt wird, bis zu einem Punkt, bei dem das maximale Motormoment übertragen werden kann. Das Anfahren ist insbesondere beim PKW im ersten Gang und im Rückwärtsgang möglich, bei stärkeren Fahrzeugen und LKW's auch im zweiten Gang. In jedem Fall kuppelt der Elektromotor bei Betätigung des Gaspedals und des zugehörigen Gas-Sollwertgebers drehzahlabhängig ein. Damit soll das Anfahren zwar sehr feinfühlig erfolgen können, dies geschieht tatsächlich wegen der schwankenden Leerlaufdrehzahl aber nur bedingt, weil der Regelbereich zwischen den genannten Punkten festliegt, indem der Kupplungsstellweg proportional zur Drehzahl verändert wird. Dabei kann das Anfahren ruckartig erfolgen, wenn beispielsweise die Leerlaufdrehzahl sehr niedrig liegt und erst bei einer größeren Drehzahldifferenz zu der Leerlaufdrehzahl ab dem vorgegebenen unteren Grenzwert eingekuppelt wird. Beim Schalten zum Gangwechsel wird das Kuppeln von einem Schalthebelkontakt ausgelöst. Das Einkuppeln erfolgt dann nach Loslassen des Schalthebels über die Zeit in Abhängigkeit von den eingeschalteten Gängen und von der Stellung des Gaspedals. Hierzu wird in der Elektronik ein programmierbares Zeitglied in Abhängigkeit von der Gangstellung und dem Geber der Gaspedalstellung über eine Logik angesteuert. Bei dieser Schaltungsanordnung ist zwischen einem ruckfreien Einkuppeln und der Dauer des Kupplungsvorgangs ein Kompromiß zu finden. Grundsätzlich muß durch das Einkuppeln eine je nach Gaspedalstellung Belastung des Fahrzeugs und Fahrzeuggeschwindigkeit gegebene Drehzahldifferenz zwischen dem antriebsseitigen Ende und dem abtriebsseitigen Ende der Kupplung als Kupplungsarbeit vernichtet, d. h. in Wärme umgesetzt werden. Dadurch ergeben sich erhebliche Beschränkungen der Einkuppelzeit und ein sanftes Einkuppeln kann nicht zuverlässig erreicht werden.

Um die Verlustleistung in den Reibelementen des automatischen Getriebes zu verringern, gehört es auch zum Stand der Technik, das Motormoment während der Getriebeschaltvorgänge zu steuern. Damit kann auch der Schaltkomfort verbessert werden. Unter dem Motoreingriff werden in diesem Zusammenhang Maßnahmen verstanden, während eines Schaltvorgangs im Getriebe das Motormoment gezielt zu beeinflussen, insbesondere zu reduzieren (Bosch Technische Berichte 7 (1983) Seiten 166 bis 174). Die bei einer Hochschaltung des Getriebes vorgesehene Verringerung des Motormoments geht u. a. davon aus, daß die Hochschaltung bei dem automatischen Getriebe ohne Zugkraftunterbrechung verläuft und der Motor mit dem Getriebe über ein Reibelement im schleifenden Eingriff synchronisiert wird. Durch die Reduktion des Motormoments kann die Schleifzeit verlängert werden, ohne die Gesamtverlustenergie in der Kupplung zu vergrößern. Die Ablaufsteuerung für den Motoreingriff erfolgt nicht als reine Zeitsteuerung, sondern als Drehzahlfolgesteuerung, um Schwankungen der den Ablauf bestimmenden Größen zu berücksichtigen. Der Motoreingriff für den gesteuerten Verlauf des Motormoments während der Schaltvorgänge eines automatischen Getriebes läßt sich nicht ohne weiteres auf die Steuerung einer Kraftfahrzeug-Schaltkupplung übertragen, bei der auch beim Hochschalten eine Zugkraftunterbrechung auftritt, da die Kupplung ganz geöffnet wird. Wegen der bekannten Nachteile der automatischen Getriebe, insbesondere einem schlechteren Wirkungsgrad zumindest in einem Teil des Arbeitsbereichs und des Herstellaufwands für automatische Getriebe besteht nach wie vor ein Bedarf, Schaltkupplungen in Verbindung mit einem üblichen Schaltgetriebe zu verwenden.

Weiterhin ist zur Verringerung des Kraftstoffverbrauchs ein mikroprozessorgesteuertes Getriebe bekannt, welches in verhältnismäßig aufwendiger Weise aus einem Standardgetriebe mit einem ringförmig ausgelegten Ravigneaux-Getriebe, zwei Freilaufkupplungen und einer im Ölbad laufenden Startkupplung vorgesehen. Die hydraulisch betätigte Startkupplung wird über ein Magnetventil gesteuert. Die Steuerungseinrichtung des Getriebes mit den Kupplungen dient vor allem dazu, den Motor im bestmöglichen Drehzahl- und Leistungsbereich arbeiten zu lassen. Hierzu werden Sollwertsignale von dem Gaspedal und einem Automatik-Schalthebel in einem Mikroprozessor zusammen mit weiteren Signalen, wie der Motordrehzahl, der Fahrgeschwindigkeit ausgewertet. Der Mikroprozessor entscheidet dann über den zu benutzenden Gang und über die Öffnung der Drosselklappe. Der Mikroprozessor ist außerdem dazu eingerichtet, unter anderem das Anfahren aus dem Stand, das Vorwählen der gewünschten Gangstufen und den eigentlichen Schaltvorgang zu steuern. Näheres ist hierzu nicht angegeben (Elektronik-Applikation 15. Jahrgang 1983 Nr. 7, Seiten 19-24).

Zum Stand der Technik gehört weiterhin eine Einrichtung zur Steuerung einer Kraftfahrzeugschaltkupplung nach dem Oberbegriff des Anspr. 3, die ein weiches Anfahren im ersten oder aber auch im zweiten Gang ermöglichen soll (EP A2 0038113). Hierzu weist die Steuereinrichtung im einzelnen einen Bezugssignalerzeuger, beispielsweise ein Potentiometer, auf, sowie einen Vergleicher, der das Bezugssignal mit einem Motordrehzahlsignal vergleicht. Durch die Differenz der beiden genannten Signale wird ein Kupplungs-Servoantrieb so gesteuert, daß durch das Einkuppeln der Motor für eine Annäherung des Drehzahlsignals an das Bezugssignal belastet wird. Die Motordrehzahl wird so bis zum vollständigen Einkuppeln annähernd konstant gehalten. Das Bezugssignal kann in Abhängigkeit von der Gaspedalstellung variiert werden. Damit soll insbesondere einem erhöhten Drehmomentbedarf bei einem Anfahren an Steigungen Rechnung getragen werden. Ein verhälnismäßig ruckweises Einkuppeln kann damit aber nicht sicher vermieden werden.

Grundsätzlich ist es bekannt, daß die Reibungsarbeit in einer Reibungs-Schaltkupplung abnimmt, wenn die Anfahrdrehzahl und demgemäß die Differenzdrehzahlen in der Kupplung geringer werden (Automobiltechnische Zeitschrift 83 (1981) 355, 357). Diese Erkenntnis ist aber zur selbsttätigen Steuerung einer Kraftfahrzeugschaltkupplung, soweit ersichtlich, im Hinblick auf schwankende Leerlaufdrehzahlen noch nicht genutzt worden.

Der vorliegenden Erfindung liegt die Aufgabe zugrunde, eine elektronische Einrichtung zur Steuerung einer Kraftfahrzeugschaltkupplung, die also zum Kuppeln eines koventionellen Schaltgetriebes dient, so weiterzuentwickeln, daß der Kupplungskomfort weiter erhöht wird, d. h. die Kupplungsvorgänge ruckfrei verlaufen und daß dabei kupplungsschonend, d. h. ohne große Kupplungsverlustarbeit, und verhältnismäßig schnell gekuppelt wird.

Diese Aufgabe wird für den Kupplungsvorgang bei dem besonders kritischen Hochschalten eines Kraftfahrzeugs in einen höheren Gang durch die Ausbildung der Einrichtung mit den in dem kennzeichnenden Teil des Anspruchs 1 angegebenen Merkmalen gelöst. Das Hochschalten ist deswegen kritisch, weil in diesem Fall üblicherweise mit Motorlast und damit mit Kupplungsbelastung gefahren wird.

Das erfindungsgemäße Prinzip beim Anfahren besteht darin, daß die aktuelle Motordrehzahl vor dem Hochschalten erfaßt und gespeichert wird, und daß im lastfreien Zustand der Kupplung, also bei geöffneter Kupplung, der Gas-Servoantrieb zur Einstellung der Füllung des Motors mit Gas-Luftgemisch so eingestellt wird, daß die Motordrehzahl um einen dem Gangsprung proportionalen Faktor herabgesetzt wird. Dabei läßt der Fahrer den Fuß bequemerweise auf dem Gaspedal, d. h. die Stellung des Gas-Sollwertgebers wird nicht verändert. Der Faktor, um den die Motordrehzahl herabgesetzt wird, ist beispielsweise bei einem Wechsel von dem ersten zum zweiten Gang typischerweise 63 % und beim Hochschalten in die höheren Gänge als Mittelwert 83 %. Um diesen Faktor kann der Gangwechseldrehzahlregler vorteilhaft durch den Geber der Gangeinstellung umgeschaltet werden. Wenn die Motordrehzahl im lastfreien Zustand den reduzierten Drehzahlwert erreicht hat, beginnt das Einkuppeln durch die Kupplungsschließsteuereinrichtung normalerweise mit einer fest vorgegebenen Schließgeschwindigkeit.

Wenn die elektronische Einrichtung erkennt, daß die Kupplung zu einem bestimmten Grad, beispielsweise 60 %, geschlossen ist, erfolgt eine Umschaltung in der Weise, daß der Gas-Servoantrieb statt von dem Gangwechseldrehzahlregler wieder weiter von dem Gas-Sollwertgeber bzw. der Gaspedalstellung gesteuert wird. Dabei wird ausgenutzt, daß die Kupplung bei dem genannten Schluß bereits das volle Motordrehmoment übertragen kann.

Da bei dem Einkuppeln praktisch keine Drehmomentdifferenz zwischen der Eingangsseite und der Ausgangsseite der Kupplung überwunden werden muß, kann der Kupplungsvorgang rasch, komfortabel und kupplungsschonend erfolgen. Durch den Gangwechseldrehzahlregler wird nur die Motordrehzahl verringernd in den Motor eingegriffen, so daß die Fahrsicherheit hoch ist. Der zusätzliche Aufwand für diese Steuerung der Kraftfahrzeugschaltkupplung beim Hochschalten ist verhältnismäßig gering, da die meisten Geber — abgesehen von den Schalthebelkontakten und dem Geber der Gangeinstellung — oft bereits zur elektronischen Übertragung der Gaspedalstellung und/oder Fahrgeschwindigkeitsregelung vorhanden sind. Dies gilt auch für den Gas-Servoantrieb.

In einer vorteilhaften Variante des voranstehenden Prinzips der Reduktion der Motordrehzahl auf eine gangsprungabhängig herabgesetzte Größe wird durch eine Ablaufsteuerung der Gas-Servoantrieb nach Öffnen der Kupplung zunächst in eine die Leerlaufdrehzahl einstellende Position gestellt und anschließend erst nach Maßgabe des Gangwechseldrehzahlreglers auf die gangsprungabhängige Größe der Motordrehzahl hochgestellt. Damit wird die gangsprungabhängige Größe der Motordrehzahl in kürzester Zeit erreicht und der Kupplungsvorgang entsprechend abgekürzt.

Durch die vorteilhafte Weiterbildung der Einrichtung nach Anspruch 2 wird gewährleistet, daß die Kupplung insbesondere beim Hochschalten, wobei der Drehzahlgradient sehr gering ist, mit einer normalen vorgegebenen Verstellgeschwindigkeit verstellt, in anderen Fällen, insbesondere beim Abwärtsschalten aber, wenn große Motordrehzahlgradienten beim Einkuppeln durch das schiebende Fahrzeug auftreten können, den Einkuppelvorgang in Abhängigkeit von dem Motordrehzahlgradienten führt. Damit soll eine übermäßige Belastung des Motors und der Kraftübertragung vermieden werden. Die Verstellgeschwindigkeit beim Einkuppeln wird in dem letztgenannten Fall hoher Motordrehzahlgradienten verringert.

Um untermöglichst allen Bedingungen ein ruckfreies Anfahren in kupplungsschonender Weise zu erreichen, ist nach einem weiteren Aspekt der Erfindung die elektronische Einrichtung zur Steuerung der Kraftfahrzeugschaltkupplung mit den Merkmalen gemäß Anspruch 3 ausgebildet. Damit erfolgt das Einkuppeln beim Anfahren nicht mehr nach dem bekannten Fliehkraftprinzip in einem fest vorgegebenen Bereich zwischen einem bestimmten unteren Grenzwert oberhalb der Leerlaufdrehzahl und einem oberen Grenzwert, bei dem das maximale Motorenmoment übertragen wird. Vielmehr wird der Bereich in Abhängigkeit von der aktuellen kurz vor dem Anfahren ermittelten und gespeicherten Leerlaufdrehzahl so verschoben, daß der untere Grenzwert der Regelung unmittelbar über der Leerlaufdrehzahlgröße liegt. Damit wird ein Anfahrruck vermieden, aber auch gewährleistet, daß der Motor beim Anfahren nicht absterben kann. Die Kupplung wird praktisch unabhängig von der Leerlaufdrehzahl beim Anfahren soweit geschlossen, daß bei einer Drehzahlerhöhung bzw. Leistungsvorgabe der Motor belastet wird. Der Schließvorgang der Kupplung beginnt also unmittelbar über der Leerlaufdrehzahl, auch wenn diese beispielsweise wegen unterschiedlicher Belastung des Motors durch Hilfsaggregate schwankt.

Die von der Führungsgröße — Motordrehzahl — abhängige Verstellung der Kupplung durch den Kupplungs-Servoantrieb wird dabei durch den Anfahrregler gesteuert.

Der Anfahrregler wird gemäß Anspruch 4 bei eingelegtem Gang insbesondere dem ersten Fahrgang oder Rückwärtsgang und durch einen Schalthebelkontakt beim Loslassen des Schalthebels aktiviert.

Nach Anspruch 5 wird nicht nur der untere Grenzwert des Bereichs der Motordrehzahl-abhängigen Regelung der Verstellung der Kupplung beim Einkuppeln verändert, sondern der gesamte Bereich mit seinem oberen Grenzwert verschoben. Damit steht der Gesamtbereich für die Regelung des Einkuppelvorgangs unabhängig von der Leerlaufdrehzahl zur Verfügung.

In einer Weiterbildung wird jedoch die elektronische Einrichtung zur Steuerung der Kraftfahrzeugschaltkupplung, insoweit sie für das Anfahren entwickelt ist, auch beim Fahren im zweiten Gang bei niedriger Geschwindigkeit verwendet. In diesem Fall kann beispielsweise im Stadtverkehr bei niedriger Geschwindigkeit mit schleifender Kupplung um enge Kurven im zweiten Gang gefahren werden.

Bei dem Fahren, insbesondere Anfahren, in einem anderen als dem ersten Fahrgang oder dem Rückwärtsgang, wird gemäß den Ansprüchen 6 und 7 vorteilhaft die Größe des Bereichs der Motordrehzahl verstellt, indem die Verstellbewegung beim Einkuppeln drehzahlabhängig geregelt wird. Insbesondere wird bei eingelegtem zweiten Gang nach Maßgabe des Gebers der Gangeinstellung der Bereich der Motordrehzahl herabgesetzt, indem die gesamte Verstellbewegung durchlaufen wird. Damit soll vor allem die Kupplung geschont werden. Eine typische Drehzahldifferenz, in der die Regelung des Einkuppelvorgangs im zweiten Gang durchgeführt wird, ist 400 U/min.

Die Veränderung des Bereichs der Drehzahldifferenz erfolgt im einzelnen nach Anspruch 8 durch Eingriff in den Proportionalbereich des Anfahrreglers.

Um die geschilderten vorteilhaften Einkuppelvorgänge sowohl beim Anfahren als auch beim Hochschalten mit geringem Aufwand zu realisieren, sind nach Anspruch 10 die Ausgänge des Anfahrreglers und des Gangwechseldrehzahlreglers über eine Kleinstwertablöseschaltung mit dem Kupplungs-Servoantrieb verbunden. Das Einkuppeln erfolgt dabei also in Abhängigkeit von dem kleinsten analogen Ausgangssignal entweder des Anfahrreglers oder des Gangwechseldrehzahlreglers. Die Ablöseschaltung kann beispielsweise als « offene Kollektorschaltung » realisiert werden, bei der zwei mit den Emittern und Kollektoren parallel geschaltete Transistoren auf einem gemeinsamen Kollektorwiderstand arbeiten, an dem die Ausgangsgröße für die Ansteuerung des Kupplungs-Servoantriebs abgegriffen wird. Die Basis des einen Transistors wird von dem Anfahrregler gesteuert und die Basis des anderen Transistors von der Kupplungsschließsteuereinrichtung.

Weiterhin ist zweckmäßig jeder Regelzweig mit dem Gangwechseldrehzahlregler — mit nachgeschalteter Kupplungsschließsteuereinrichtung — sowie mit dem Anfahrregler bis zu dem Kupplungs-Servoantrieb mit einem solchen Zeitverhalten ausgebildet, daß der Anfangsstrom beim Einschalten des Kupplungs-Servoantriebs überschwingt. Damit wird ausgenutzt, daß die Kupplung mit geringerem Strom offengehalten werden kann, als die vollständige Öffnung selbst zunächst erfordert. Dies ist auf die mechanische Hysterese insbesondere in den Übertragungsorganen zwischen dem Kupplungs-Servoantrieb und der Kupplung (Bowdenzug) zurückzuführen. Durch das angegebene Zeitverhalten kann die Leistungsendstufe des Kupplungs-Servoantriebs schwächer dimensioniert werden und die thermische Belastung des Kupplungs-Servoantriebs herabgesetzt werden.

Das genannte Zeitverhalten kann besonders vorteilhaft in der Leistungsendstufe des Kupplungs-Servoantriebs maßgeblich realisiert werden, beispielsweise durch ein $PT_2$-Verhalten.

Weiterhin ist, um mit einem verhältnismäßig schwach dimensionierten Kupplungs-Servoantrieb arbeiten zu können, der keine Verlustleistung verarbeitet, die Maßnahme nach Anspruch 12 vorgesehen. Damit wird insbesondere erreicht, daß die Kupplung nicht unnötig offengehalten wird, insbesondere wenn nach dem Einschalten der Zündung eines Kraftfahrzeugs das Getriebe auf Leerlauf geschaltet ist.

Die Erfindung wird im folgenden anhand einer Zeichnung mit zwei Figuren erläutert. Es zeigen :

Fig. 1 ein Blockschaltbild der elektronischen Einrichtung zur Steuerung einer Kraftfahrzeugschaltkupplung, und

Fig. 2 Zeitdiagramme a, b, c, welche den Verlauf des Kupplungsverstellwegs, der Motordrehzahl n sowie der Drosselklappenstellung α darstellen.

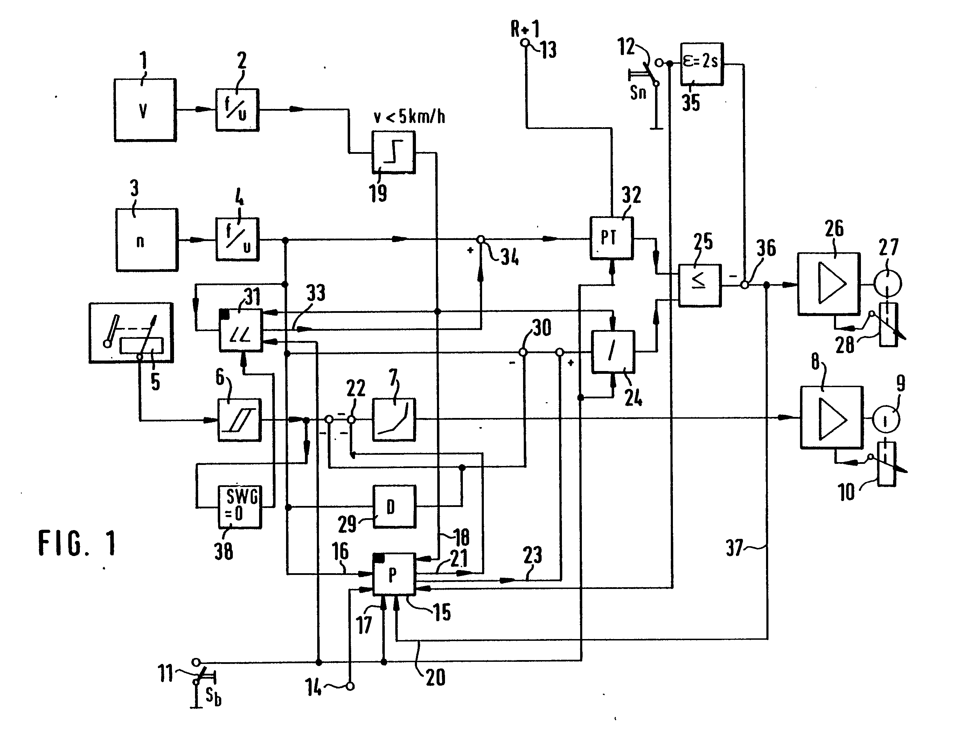

In Fig. 1 ist mit 1 ein Fahrzeuggeschwindigkeitsgeber bezeichnet, der zusammen mit einem Frequenz/Spannungsumsetzer 2 zu einem nichtdargestellten elektronischen Tachometer gehören kann.

Als zweiter Geber ist ein Motordrehzahlgeber 3 ebenfalls mit einem Frequenz/Spannungsumsetzer 4 vorgesehen, der sonst zur Ansteuerung eines nichtdargestellten elektronischen Drehzahlanzeigegeräts und/oder zu einer Motorsteuerung herangezogen werden kann.

Weiterhin ist ein Gas-Sollwertgeber 5, der durch ein Gaspedal betätigbar ist, dargestellt. Der Sollwertgeber steht über eine dynamische Hystereseeinrichtung 6, welche ein Aufschaukeln der Motordrehzahl, insbesondere beim Anfahren und einer weichen Motoraufhängung und/oder elastischem Antriebsstrang verhindern soll. In Signalflußrichtung hinter der Hystereseeinrichtung folgt eine Progressionsschaltung 7, welche die gewünschte Abhängigkeit des Gas-Sollwerts von der Gaspedalstellung erzeugen soll, sowie eine Leistungsendstufe 8, die einen Gas-Servoantrieb (Motor) 9 beaufschlagt. Der Gas-Servoantrieb steht mit einem Positionsgeber-Widerstand 10 sowie mit einer nichtdargestellten Drosselklappe zur Beeinflussung des Gas-Luftgemisches des Verbrennungsmotors in mechanischer Verbindung. Die beschriebenen Elemente 5 bis 10 gehören normalerweise zu einer Einrichtung zur elektronischen Betätigung der Drosselklappe durch das Gaspedal.

Zur Signalisierung, ob ein nichtdargestellter Schalthebel durch den Fahrer betätigt wird, dient ein Schalthebelkontakt 11. Zur Signalisierung der Neutralstellung des Schalthebels ist ein weiterer Schalthebelkontakt 12 vorgesehen. Ein nichtdargestellter Geber der Gangeinstellung ist an eine Klemme 13 zur Signalisierung des eingelegten ersten Ganges oder Rückwärtsganges angeschlossen, sowie an eine Klemme 14, gegebenenfalls auch zur Signalisierung höherer eingeschalteter Fahrgänge.

Zur Steuerung der Kraftfahrzeugschaltkupplung beim Hochschalten ist ein Gangwechseldrehzahlregler mit eingangsseitiger Abtast- und Speicherschaltung 15 vorgesehen.

Ein Eingang des Gangwechseldrehzahlreglers und der Abtast- und Speicherschaltung 16 steht mit dem Motordrehzahlgeber 3 in Verbindung. Zur Zeitablaufsteuerung des Gangwechseldrehzahlreglers mit Abtast- und Speicherschaltung dienen ein Steuereingang 17, der mit dem Schalthebelkontakt 11 verbunden ist, ein Steuereingang 18, der ein Signal von einem Geber 19 oberhalb einer vorbestimmten Fahrgeschwindigkeit von beispielsweise 5 km/h erhält, sowie ein Steuereingang 20, in den ein Signal einläuft, wenn die Kupplung soweit geschlossen ist, daß das volle Motordrehmoment übertragen werden kann. Die Elemente 17 bis 20 dienen zu einer internen Zeitablaufsteuerung.

Über die Klemme 14 für den Geber der Gangeinstellung wird der Faktor eingestellt, um den durch eine Ausgangsgröße an einem Ausgang 21 die Ist-Drehzahl des Motors gegenüber einer in der Abtast- und Halteschaltung gespeicherten Drehzahl herabgesetzt wird. Insbesondere beträgt in einem Beispiel die Reduktion beim Wechsel von dem ersten zu dem zweiten Gang 63 % der gespeicherten Motordrehzahl und bei einem Wechsel in die höheren Gänge 83 %. Die Regelung der Motordrehzahl durch den Gangwechseldrehzahlregler greift an einer Subtraktionsstelle 22 vor der Progressionsschaltung 7 in die elektronische Übertragung des Gas-Sollwertgebers ein.

Durch einen zweiten Ausgang 23 wird das Einkuppeln beim Hochschalten in Verbindung mit einer Kupplungsschließsteuereinrichtung 24 gesteuert. Mit der Kupplungsschließsteuereinrichtung wird der Einkuppelvorgang, d. h. der Verstellweg der Kupplung mit konstanter vorgegebener Geschwindigkeit gesteuert, wenn der Drehzahlgradient der Motordrehzahl vorgebene Grenzwerte nicht überschreitet. Die Kupplungsschließsteuereinrichtung ist ebenfalls in die Zeitablaufsteuerung durch den Schalthebelkontakt 11 sowie den Signalgeber der Fahrgeschwindigkeit 19 einbezogen. Ein Ausgang der Kupplungsschließsteuereinrichtung steht über eine bereits allgemein erläuterte Ablöseschaltung bzw. Kleinstwertschaltung 25, eine Leistungsendstufe 26 mit dem Kupplungs-Servoantrieb 27 in Verbindung. Zu dem Kupplungs-Servoantrieb gehört wiederum ein Positionsgeberwiderstand 28. Die Leistungsendstufe 26 hat in Verbindung mit den vorgeschalteten Elementen der Kupplungsregelung, insbesondere dem Gangwechseldrehzahlregler eine solche Charakteristik, daß der Anfangsstrom zum Öffnen der Kupplung überschwingt und zum Offenhalten in einen niedrigeren stationären Wert übergeht.

Um die Kupplung nicht zu rasch durch die Kupplungsschließsteuereinrichtung 24 zu schließen, wenn insbesondere beim Herabschalten der Gradient der Motordrehzahl vorgegebene Grenzwerte in der einen oder anderen Richtung überschreitet, greift ein Drehzahldifferenzierer 29 über ein Substraktionsglied 30 in die Kupplungsschließsteuereinrichtung die Verstellgeschwindigkeit der Kupplung vermindernd ein.

Zu der Steuerung des Einkuppelns beim Anfahren dienen ein Leerlaufdrehzahlspeicher 31 sowie ein Anfahrregler 32, der als PT-Regler ausgebildet ist. Sowohl der Leerlaufdrehzahlspeicher als auch der Anfahrregler sind in eine Ablaufsteuerung einbezogen, die Signale von dem Schalthebelkontakt 11 und — für den Leerlaufdrehzahlspeicher — von dem Signalgeber 19 für die Fahrgeschwindigkeit unter 5 km/h erhält. Ein Ausgang 33 des Leerlaufdrehzahlspeichers ist zu einer Additionsstelle 34 geführt, die außerdem mit dem Frequenz/Spannungsumsetzer 4 des Motordrehzahlgebers 3 in Verbindung steht und den Eingang des Anfahrreglers 32 bildet. Der Ausgang des Anfahrreglers 32 ist an den zweiten Eingang der Kleinstwertschaltung 25 angeschlossen.

Aus Fig.1 ist noch ersichtlich, daß der Schalthebelkontakt 12 für die Neutralstellung über ein Zeitglied 35, welches eine Verzögerungszeit von 2 Sek. ergibt, über eine Substraktionsstelle 36 in die Zuleitung zu der Leistungsendstufe 26 des Kupplungs-Servoantriebs eingeschaltet ist. Durch den Schalthebelkontakt 12 wird ein die Kupplung schließendes Signal nach 2 Sek. an den Kupplungs-Servoantrieb abgegeben, wenn sich der Schalthebel in seiner Neutralstellung befindet.

In Signalflußrichtung hinter der Substraktionsstelle 36 ist eine Rückführung 37 zu dem Steuereingang 20 des Gangwechseldrehzahlreglers 15 vorgesehen, durch die über den ersten Ausgang 21 des Gangwechseldrehzahlreglers und die Substraktionsstelle 22 der Gas-Sollwertgeber 5 zu dem Gas-Servoantrieb 9 anstelle der Ausgangsgröße des Gangwechseldrehzahlreglers wirksam wird, wenn der Schließvorgang der Kupplung einen vorbestimmten Wert erreicht hat.

Nachzutragen ist noch, daß zur Steuerung des Leerlaufdrehzahlspeichers 31 ein Diskriminator 38 gehört, der den Leerlaufdrehzahlspeicher nur dann zur Speicherung einer Leerlaufdrehzahlgröße bereitmacht, wenn der Gas-Sollwertgeber in seiner Ruhestellung ist.

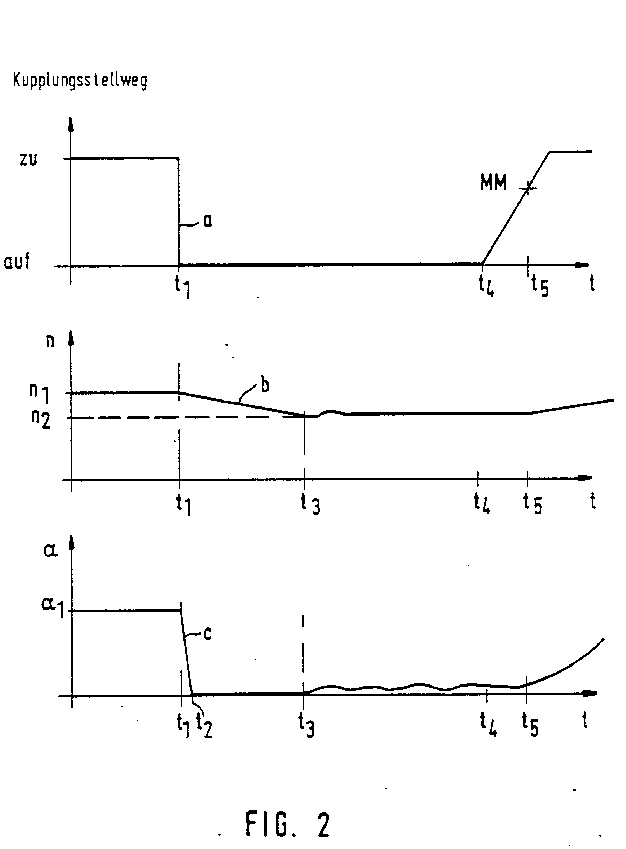

Es wird zunächst die Funktion der in Fig. 1 dargestellten Einrichtung beim Kuppeln im Zusammenhang mit einem Hochschalten des Schaltgetriebes besprochen, wozu auch auf Fig. 2 Bezug genommen wird.

Es sei zunächst angenommen, daß bis zu dem Zeitpunkt $t_1$ das Fahrzeug mit geschlossener Kupplung — Kurve a — und der Motordrehzahl $n_1$ fährt, wobei die Drosselklappe auf den Wert $\alpha_1$ eingestellt ist.

Durch Betätigen des Schalthebels wird bei unveränderter Gaspedalstellung folgende Ablaufsteuerung eingeleitet : Es wird die Kupplung zwangsweise durch den Schalthebelkontakt zum Zeitpunkt $t_1$ geöffnet, siehe Kurve a in Fig. 2. Es wird über eine nichtdargestellt Kippstufe die Kupplungssteuerung durch den Gangwechseldrehzahlregler 15 freigegeben. Die im Augenblick der Betätigung des Schalthebelkontakts gemessene Motordrehzahl wird durch die Abtast- und Speicherschaltung in dem Gangwechseldrehzahlregler 15 gespeichert. Der Gas-Servoantrieb 9 wird durch den Ausgang 21 des Gangwechseldrehzahlreglers 15 in die Leerlaufposition gefahren, die zum Zeitpunkt $t_2$ erreicht ist. Dadurch wird die Drehzahl bis zu dem Wert $n_2$ zum Zeitpunkt $t_3$ heruntergefahren. Die dann erreichte Drehzahl $n_2$ ergibt sich durch Reduktion der gespeicherten Leerlaufdrehzahl um einen Faktor, der entsprechend dem Gangsprung, hier von dem ersten zu dem zweiten Gang, voreingestellt ist und über die Klemme 14 aktiviert wird. Wenn die neue Motordrehzahl $n_2$ bei geöffneter Kupplung zum Zeitpunkt $t_3$ erreicht ist, wird diese Drehzahl stabilisiert, indem die Drosselklappe durch den Gas-Servoantrieb durch den Ausgang 21 gesteuert insoweit ansteigt. Wenn diese neue Drehzahl $n_2$ stabil ist, wird durch ein Signal an dem Ausgang 23 des Gangwechseldrehzahlreglers 15 der Schließvorgang der Kupplung mittels der Kupplungsschließsteuereinrichtung 24 mit vorgegebener Verstellgeschwindigkeit ab dem Zeitpunkt $t_4$ eingeschaltet. Wenn die Kupplung zum Zeitpunkt $t_5$ soweit geschlossen ist, daß sie das maximale Motormoment übertragen kann, wird statt des Ausgangs 21 wieder der Gas-Sollwertgeber zu dem Gas-Servoantrieb durchgeschaltet, die Drosselklappe wird ab $t_5$ geöffnet und die Motordrehzahl steigt wieder an, soweit dies die Belastung erlaubt. Die Ablaufsteuerung wird auf den Ausgangszustand zurückgestellt.

Beim Anfahren erfolgt das selbsttätige Einkuppeln unter den Bedingungen, daß das Fahrzeug praktisch steht — Signalgeber 19 —, daß kein Gas gegeben wird — Diskriminator 38 —, daß der Schalthebel betätigt wird — Schalthebelkontakt 11 — und daß die Drehzahl in einem vorgegebenen Bereich liegt. Unter diesen Umständen wird zunächst die momentane Leerlaufdrehzahl in dem Leerlaufdrehzahlspeicher 31 gespeichert und von der festen Führung des Anfahrreglers 32 durch die Motordrehzahl an der Stelle 34 abgezogen. Der Anfahrregler 32 beginnt nun sofort eine Ausgangsgröße zum Schließen des Kupplungs-Servoantriebs über die Kleinstwertschaltung 25 abzugeben, sobald durch Erhöhen der Motordrehzahl mit dem Gaspedal die gespeicherte Leerlaufdrehzahl überschritten wird. Der Anfahrregler schließt weiter die Kupplung nach dem Prinzip der Fliehkraftkupplung.

Diese Funktion der Fliehkraftkupplung wird unter bestimmten Bedingungen auch im zweiten Gang insbesondere für langsame Fahrten genutzt. Hierzu wird durch die Klemme 13 der Proportionalbereich des Anfahrreglers auf einen kleineren Wert von beispielsweise 400 U/min reduziert. Der Anfahrregler wird im zweiten Gang weggeschaltet, wenn durch einen nichtdargestellten Diskriminator eine höhere Fahrgeschwindigkeit beispielsweise als 18 km/h erkannt wird. Zum Schließen der Kupplung können weitere Zeitfunktionen unterlagert sein, um richtige Kupplungsreaktionen bei bestimmten Bedingungen hervorzurufen, jedoch sind diese zusätzlichen Zeitglieder in der Zeichnung nicht dargestellt.

Durch die beschriebene Einrichtung übernehmen zwei teilweise miteinander vermaschte Regelkreise für den Kupplungs-Servoantrieb und den Gas-Servoantrieb wesentliche Funktionen der Fahrzeugantriebssteuerung und entlasten den Fahrer wirkungsvoll. Es werden die Voraussetzungen geschaffen, einen wirtschaftlichen Fahrbetrieb zu ermöglichen und weitere Automatisierungen, insbesondere einen selbsttätigen Gangwechsel, zu ermöglichen.

## Patentansprüche

1. Elektronische Einrichtung zur Steuerung einer Kraftfahrzeugkupplung, die durch einen Kupplungs-Servoantrieb (27) betätigt wird,
- mit einem Schalthebel für die Gangeinstellung mit Schalthebelkontakten (11, 12, 13), durch die ein Kuppel-Zeitablauf gesteuert wird,
- mit einem Geber (14) der Gangeinstellung,
- mit einem Gas-Sollwertgeber (5),
- mit einem Gas-Servoantrieb (9) der beim Hochschalten die Motordrehzahl (n1) auf eine entsprechend dem Gangsprung korrigierte Größe (n2) herabsetzt,
- mit einer Abtast- und Halteschaltung (16) zur Speicherung einer vor dem Auskuppeln erzeugten Motordrehzahl,
- mit einem Motordrehzahlgeber (3) für eine drehzahlabhängige Kupplungssteuerung,
- mit einer Kupplungs-Schließsteuereinrichtung (24), durch die das Einkuppeln mit Gangwechsel abhängig von mindestens einer Fahrzeugmotor-Betriebsgröße nach Loslassen des Schalthebels bewirkt wird, dadurch gekennzeichnet, daß die Einstellung der korrigierten Motordrehzahl (n2) durch Eingriff eines Gangwechsel-Drehzahlreglers (15) in die elektronische Übertragung, z. B. an der Subtraktionsstelle (22), des Gassollwertgebers (5) direkt erfolgt.

2. Elektronische Einrichtung zur Steuerung einer Kraftfahrzeugschaltkupplung nach Anspruch 1, dadurch gekennzeichnet, daß ein Drehzahldifferenzierer (29) an die Kupplungssteuerungseinrichtung (24) derart angeschlossen ist, daß die Kupplung mit einer normalen vorgegebenen Verstellgeschwindigkeit geschlossen wird, wenn der Drehzahlgradient des Fahrzeugmotors innerhalb vorgegebener Grenzen bleibt und im anderen Fall die Verstellgeschwindigkeit drehzahlgradientenabhängig führt.

3. Elektronische Einrichtung zur Steuerung einer Kraftfahrzeugschaltkupplung, die durch einen Kupplungs-Servoantrieb (27) betätigt wird, mit einem Schalthebel für die Gangeinstellung mit Schalthebelkontakten (11, 12), durch die ein Kuppel-Zeitablauf gesteuert wird, mit einem Geber der Gangeinstellung (13), mit einem Gas-Sollwertgeber (5), mit einem Gas-Servoantrieb (9) für eine drehzahlabhängige Kupplungssteuerung, mit einem Fahrzeuggeschwindigkeitsgeber (1) sowie mit einem Anfahrregler (32), der das Einkuppeln beim Anfahren in einem vorgegebenen Bereich der Motordrehzahl drehzahlabhängig steuert, dadurch gekennzeichnet, daß in einen von dem Fahrzeuggeschwindigkeitsgeber (1) bei annähernd stehendem Fahrzeug von dem Gas-Sollwertgeber (5) in Ruhestellung und in einer Lage eines Schalthebelkontakts (11) für betätigten Schalthebel aktivierten Leerlaufdrehzahlspeicher (31) die Leerlaufdrehzahlgröße eingespeichert wird, daß ein Ausgang (33) des Leerlaufdrehzahlspeichers und der Motordrehzahlgeber (3) mit dem Eingang des Anfahrreglers (32) zur Störgrößenaufschaltung der Leerlaufdrehzahl derart in Verbindung stehen, daß der Anfahrregler das Einkuppeln beim Anfahren über den Kupplungs-Servoantrieb (27) drehzahlabhängig steuert, sobald die Motordrehzahl die gespeicherte Leerlaufdrehzahlgröße überschreitet.

4. Elektronische Einrichtung zur Steuerung einer Kraftfahrzeugschaltkupplung nach Anspruch 3, dadurch gekennzeichnet, daß der Anfahrregler (32) bei eingelegtem Gang durch einen Schalthebelkontakt (11) aktiviert wird.

5. Elektronische Einrichtung zur Steuerung einer Kraftfahrzeugschaltkupplung nach Anspruch 3 oder 4, dadurch gekennzeichnet, daß der Bereich (Differenz) der Motordrehzahl, in dem der Einkuppelvorgang drehzahlabhängig gesteuert wird, in Abhängigkeit von der jeweiligen Leerlaufdrehzahl vor Beginn des Einkuppelns (in 31) selbsttätig verschiebbar ist.

6. Elektronische Einrichtung zur Steuerung einer Kraftfahrzeugschaltkupplung nach einem der Ansprüche 3-5, dadurch gekennzeichnet, daß durch den Geber der Gangstellungen (Anklemme 13) die Größe des Bereichs (Differenz) der Motordrehzahl steuerbar ist, indem der Einkuppelvorgang drehzahlabhängig geregelt wird.

7. Elektronische Einrichtung zur Steuerung einer Kraftfahrzeugschaltkupplung nach Anspruch 6, dadurch gekennzeichnet, daß beim Anfahren im zweiten Gang der Anfahrregler (32) unterhalb einer vorgegebenen Geschwindigkeit aktiviert ist und daß der Bereich (Differenz) der Motordrehzahl durch den Geber der Gangstellung reduziert wird.

8. Elektronische Einrichtung zur Steuerung einer Kraftfahrzeugschaltkupplung nach Anspruch 6 oder 7, dadurch gekennzeichnet, daß der Proportionalbereich des Anfahrreglers (32) in Abhängigkeit von dem Geber der Gangstellung (Anklemme 13) umschaltbar ist.

9. Elektronische Einrichtung zur Steuerung einer Kraftfahrzeugschaltkupplung nach Anspruch 1 oder 2, dadurch gekennzeichnet, daß von einem Ausgang der Kupplungsschließsteuereinrichtung ein Schließsignal abgegeben wird, wenn der Schließvorgang einen vorgegebenen Wert (z. B. 60 % des Kupplungswegs) erreicht hat, durch welches der Gas-Servoantrieb (9) in Abhängigkeit von dem Gas-Sollwertgeber (5) verstellbar wird.

10. Elektronische Einrichtung zur Steuerung einer Kraftfahrzeugschaltkupplung, die durch einen bestromten Kupplungs-Servoantrieb geöffnet wird, nach den Ansprüchen 1 und 3, dadurch gekennzeichnet, daß ein Ausgang einer an den Gangwechseldrehzahlregler (15) angeschlossene Kupplungsschließsteuereinrichtung (24) und ein Ausgang des Anfahrreglers (32) über eine Kleinstwert-Ablöseschaltung (25) mit dem Kupplungs-Servoantrieb (27) in Verbindung stehen.

11. Elektronische Einrichtung zur Steuerung einer Kraftfahrzeugschaltkupplung nach einem der Ansprüche 1-10, dadurch gekennzeichnet, daß jeder Regelzweig mit dem Gangwechsel-Drehzahlregler (15) bzw. dem Anfahrregler (32) zu der Leistungsendstufe des Kupplungs-Servoantriebs (27) mit einem solchen Zeitverhalten ausgebildet ist, daß der Anfangsstrom beim Einschalten des Kupplungs-Servoantriebs überschwingt.

12. Elektronische Einrichtung zur Steuerung einer Kraftfahrzeugschaltkupplung nach einem der Ansprüche 1-11, dadurch gekennzeichnet, daß ein Schalthebelkontakt (12), der eine Neutralstellung des Schalthebels signalisiert, über ein Verzögerungsglied (35) die Kupplung nach einer vorgegebenen Verzögerungszeit schließt.

13. Elektronische Einrichtung zur Steuerung einer Kraftfahrzeugschaltkupplung nach einem der Ansprüche 1, 2 oder 9, dadurch gekennzeichnet, daß durch eine Ablaufsteuerung der Gas-Servoantrieb (9) nach Öffnen der Kupplung zunächst in eine die Leerlaufdrehzahl einstellende Position gestellt wird und anschließend nach Maßgabe des Gangwechseldrehzahlreglers auf die Gangsprung-abhängige Größe der Motordrehzahl hochgestellt wird.

## Claims

1. Electronic device for controlling a motor vehicle clutch, which is operated by a clutch servo drive (27),
- with a shift lever for the gear adjustment, having shift-lever contacts (11, 12, 13), by which a clutch operation time sequence is controlled,
- with a pickup (14) of the gear adjustment,
- with an accelerator setpoint generator (5),
- with an accelerator servo drive (9) which, when the engine speed (n1) is shifted up, is reduced to a value (n2) correspondingly corrected to the gear change,
- with a sample-and-hold circuit (16) for storing an engine speed generated before the clutch disengagement,
- with an engine speed pickup (3) for a speed-dependent clutch control,
- with a clutch-closing control device (24), by which the clutch engagement when there is a gear change is effected dependently on at least one vehicle engine operating parameter after release of the shift lever, characterized in that the adjustment of the corrected engine speed (n2) takes place directly by intervention of a gear-change speed controller (15) in the electronic transmission, for example at the subtraction point (22), of the accelerator setpoint generator (5).

2. Electronic device for controlling a motor vehicle clutch according to Claim 1, characterized in that a speed differentiator (29) is connected to the clutch control device (24) in such a way that the clutch is closed at a normal predetermined rate of adjustment if the speed gradient of the vehicle engine remains within predetermined limits and otherwise conducts the rate of adjustment speed-gradient dependently.

3. Electronic device for controlling a motor vehicle clutch, which is operated by a clutch servo drive (27), with a shift lever for the gear adjustment with shift lever contacts (11, 12), by which a clutch operation time sequence is controlled, with a pickup of the gear adjustment (13), with an accelerator setpoint generator (5), with an accelerator servo drive (9) for a speed-dependent clutch control, with a vehicle velocity pickup (1) and with a starting controller (32), which controls the clutch engagement during starting in a predetermined range of the engine speed, characterized in that the idling speed value is entered into an idling speed memory (31), activitated by the vehicle velocity pickup (1) when the vehicle is approximately stationary, by the accelerator setpoint generator (5) in rest position and in a position of a shift lever contact (11) for operated shift lever, in that, for feedforward control of the idling speed, an output (33) of the idling speed memory and the engine speed pickup (3) are in connection with the input of the starting controller (32) in such a way that the starting controller controls the clutch engagement during starting speed-dependently via the clutch servo drive (27) as soon as the engine speed exceeds the stored idling speed value.

4. Electronic device for controlling a motor vehicle clutch according to Claim 3, characterized in that the starting controller (32) is activated by a shift lever contact (11) when a gear is engaged.

5. Electronic device for controlling a motor vehicle clutch according to Claim 3 or 4, characterized in that the range (difference) of the engine speed in which the clutch engagement operation is controlled speed-dependently is automatically displaceable as a function of the respective idling speed before the beginning of the clutch engagement (31).

6. Electronic device for controlling a motor vehicle clutch according to one of Claims 3-5, characterized in that the size of the range (difference) of the engine speed can be controlled by the pickup of the gear positions (terminal 13) by the clutch engagement operation being controlled speed-dependently.

7. Electronic device for controlling a motor vehicle clutch according to Claim 6, characterized in that, in starting in second gear, the starting controller (32) is activated below a predetermined velocity and in that the range (difference) of the engine speed is reduced by the pickup of the gear position.

8. Electronic device for controlling a motor vehicle clutch according to Claim 6 or 7, characterized in that the proportional range of the starting controller (32) can be switched over in dependence on the pickup of the gear position (terminal 13).

9. Electronic device for controlling a motor vehicle clutch according to Claim 1 or 2, characterized in that a closing signal is emitted from an output of the clutch-closing control device whenever the closing operation has reached a predetermined value (for example 60 % of the clutch operating stroke), by which signal the accelerator servo drive (9) is adjustable in dependence on the accelerator setpoint generator (5).

10. Electronic device for controlling a motor vehicle clutch, which is opened by a clutch servo drive to which current is applied, according to Claims 1 and 3, characterized in that an output of a clutch-closing control device (24), connected to the gear-change speed controller (15), and an output of the starting controller (32) are in connection with the clutch servo drive (27) via a minimum-value transfer circuit (25).

11. Electronic device for controlling a motor vehicle clutch according to one of Claims 1-10, characterized in that each control branch with the gear-change speed controller (15) and the starting controller (32), respectively, to the power output stage of the clutch servo drive (27) is designed with such a time behaviour that the starting current overshoots in the switching-on of the clutch servo drive.

12. Electronic device for controlling a motor vehicle clutch according to Claims 1-11, characterized in that a shift lever contact (12), which signals a neutral position of the shift lever, closes the clutch after a predetermined delay time via a delay element (35).

13. Electronic device for controlling a motor vehicle clutch according to one of Claims 1, 2 or 9, characterized in that, by a sequence control, the accelerator servo drive (9) is positioned after opening of the clutch firstly into a position adjusting the idling speed and is subsequently moved up in accordance with the gear-change speed controller to the gear-change dependent value of the engine speed.

## Revendications

1. Dispositif électronique de commande d'un embrayage de véhicule à moteur, qui est actionné par un dispositif (27) d'entraînement d'embrayage asservi, comportant

- un levier de changement de vitesse pour le passage des vitesses, comportant des contacts (11, 12, 13) de levier de changement de vitesse, grâce auxquels on commande un déroulement, déterminé dans le temps, du processus d'embrayage,

- un détecteur (14) de position de vitesse ou de régime,

- un détecteur (5) de valeur de consigne pour la commande des gaz,

- un dispositif d'entraînement (9) asservi de commande des gaz, lequel dans le cas de passage à une vitesse supérieure, ramène la vitesse ($n_1$) de rotation du moteur à une valeur ($n_2$) corrigée en fonction du saut de vitesse,

- un circuit (16) d'analyse et de retenue, destiné à la mémorisation d'une vitesse de rotation de moteur effective avant le débrayage,

- un détecteur (3) de vitesse de rotation de moteur, destiné à une commande d'embrayage réalisée en fonction de la vitesse de rotation,

- un dispositif (24) de commande d'opération d'embrayage, au moyen duquel l'opération d'embrayage liée au changement de vitesse s'effectue en fonction d'au moins un des paramètres de fonctionnement du moteur de véhicule, après que l'on ait abandonné le levier de changement de vitesses, dispositif caractérisé en ce que l'insertion de la vitesse corrigée ($n_2$) de rotation de moteur s'effectue, par une intervention directe d'un dispositif (15) de réglage de vitesse de rotation lors du changement de vitesse, dans le circuit de transmission électronique, par exemple au point (22) de soustraction du signal émis par le détecteur (5) de valeur de consigne pour la commande de gaz.

2. Dispositif électronique de commande d'un embrayage de véhicule à moteur selon la revendication 1, caractérisé en ce qu'un dispositif (29) d'appréciation de différence de vitesse de rotation est raccordé au dispositif (24) de commande d'embrayage de façon telle que l'embrayage embraye avec une vitesse normale de changement de position, déterminée à l'avance, lorsque le gradient de vitesse de rotation du véhicule est compris à l'intérieur de limites déterminées à l'avance et, dans l'autre cas, pilote la vitesse de changement de position en fonction du gradient de vitesse de rotation.

3. Dispositif électronique de commande d'un embrayage de véhicule à moteur, qui est actionné par un dispositif (27) d'entraînement d'embrayage asservi, comprenant un levier de changement de vitesse pour le passage des vitesses comportant des contacts (11, 12) de levier de changement de vitesse, qui commandent déroulement dans le temps de l'opération d'embrayage, un détecteur de position de vitesse ou de régime (13), un émetteur (5) de valeur de consigne pour la commande de gaz, un dispositif (9) d'entraînement asservi de commande des gaz destiné à une commande d'embrayage en fonction de la vitesse de rotation, un capteur ou détecteur (1) de vitesse du véhicule ainsi qu'un dispositif (32) de démarrage asservi qui commande l'opération d'embrayage en fonction de la vitesse de rotation dans le cas d'un démarrage effectué dans un domaine prédéterminé de vitesses de rotation du moteur, dispositif caractérisé en ce que la valeur de vitesse de rotation au ralenti est mise en mémoire, dans une mémoire (31) de vitesse de rotation au ralenti activée par le détecteur (1) de vitesse du véhicule quand le véhicule est approximativement à l'arrêt, par l'émetteur (5) de valeur de consigne prescrite de commande des gaz, en position de repos, et par le contact (11) de levier de changement de vitesse quand ce levier est dans une position correspondant à un actionnement effectué sur le levier de changement de vitesse ; en ce qu'une sortie (33) de la mémoire de vitesse de rotation au ralenti et le détecteur (3) de vitesse de rotation de moteur sont reliés à l'entrée du dispositif (32) de démarrage asservi en vue de l'élimination des valeurs perturbées de la vitesse de rotation au ralenti, de façon telle que le dispositif de démarrage asservi commande, lors du démarrage, l'opération d'embrayage, en fonction de la vitesse de rotation, par l'intermédiaire du dispositif (27) d'entraînement d'embrayage asservi, dès que la vitesse de rotation du moteur dépasse la valeur de vitesse de rotation au ralenti mise en mémoire.

4. Dispositif électronique de commande d'un embrayage de véhicule à moteur selon la revendication 3, caractérisé en ce que le dispositif (32) de démarrage asservi est activé par un contact (11) de levier de changement de vitesse, lorsqu'une vitesse est passée.

5. Dispositif électronique de commande d'un embrayage de véhicule à moteur, selon la revendication 3 ou 4, caractérisé en ce que le domaine (différence) de vitesses de rotation du moteur, dans lequel l'opération d'embrayage est commandée en fonction de la vitesse de rotation, peut être décalé automatiquement en fonction de la vitesse de rotation au ralenti instantanée avant le début de l'opération d'embrayage (en mémoire en 31).

6. Dispositif électronique de commande d'un embrayage de véhicule à moteur selon une des revendications 3 à 5, caractérisé en ce que la dimension du domaine (différence) de vitesses de rotation de moteur peut être commandée par le capteur de position de vitesse ou de régime (borne 13), l'opération d'embrayage étant asservie en fonction de la vitesse de rotation.

7. Dispositif électronique de commande d'un embrayage de véhicule à moteur selon la revendication 6, caractérisé en ce que, dans le cas d'un démarrage en seconde vitesse, le dispositif (32) de démarrage asservi est activé en dessous d'une vitesse déterminée à l'avance et en ce que le domaine (différence) de vitesses de rotation de moteur est réduit par le capteur décelant la position de vitesse ou le régime.

8. Dispositif électronique de commande d'un embrayage de véhicule à moteur selon la revendication 6 ou 7, caractérisé en ce que la zone proportionnelle du dispositif (32) de démarrage asservi peut être commutée sous la dépendance du capteur décelant la position de vitesse ou le régime (borne 13).

9. Dispositif électronique de commande d'un embrayage de véhicule à moteur selon la revendication 1 ou 2, caractérisé en ce qu'un signal d'embrayage est délivré par une sortie du dispositif de commande d'opération d'embrayage, lorsque l'opération d'embrayage a atteint un stade déterminé à l'avance (par exemple 60 % de la course d'embrayage), signal au moyen duquel le dispositif (9) d'entraînement asservi de commande des gaz peut être réglé en fonction du signal émis par le détecteur (15) de consigne pour la commande des gaz.

10. Dispositif électronique de commande d'un embrayage de véhicule à moteur, qui est débrayé au moyen d'un dispositif d'entraînement d'embrayage asservi fonctionnant sous l'effet d'un courant électrique, selon les revendications 1 et 3, dispositif caractérisé en ce qu'une sortie d'un dispositif (24) de commande d'opération d'embrayage, raccordé au dispositif (15) de réglage de vitesse de rotation lors d'un changement de vitesse, et une sortie du dispositif (32) de démarrage asservi, sont reliées, par l'intermédiaire d'un circuit (25) de délivrance de valeur minimale, au dispositif (27) d'entraînement d'embrayage asservi.

11. Dispositif électronique de commande d'un embrayage de véhicule à moteur selon une des revendications 1 à 10, caractérisé en ce que chacune des branches d'asservissement, comportant l'une le dispositif (15) de réglage de la vitesse de rotation lors d'un changement de vitesse, et l'autre le dispositif (32) de démarrage asservi, menant à l'étage terminal de puissance du dispositif (27) d'entraînement d'embrayage asservi dans le temps est doté d'un comportement dans le temps tel que le courant initial présente un saut d'amplitude lors de la mise en circuit du dispositif d'entraînement d'embrayage asservi.

12. Dispositif électronique de commande d'un embrayage de véhicule à moteur selon une des revendications 1 à 11, caractérisé en ce qu'un contact (12) de levier de changement de vitesse, qui signale une position de point mort du levier de changement de vitesse, provoque après un temps prédéterminé de retard, introduit par un organe temporisateur (35), l'opération d'embrayage du mécanisme de l'embrayage.

13. Dispositif électronique de commande d'un embrayage de véhicule à moteur selon une des revendications 1, 2 ou 9, caractérisé en ce que, sous l'effet d'une commande de fonctionnement et après le débrayage du mécanisme de l'embrayage, le dispositif (9) d'entraînement asservi de la commande des gaz est d'abord mis sur une position qui détermine la vitesse de rotation de ralenti ; puis la vitesse de rotation du moteur est relevée sous la dépendance du dispositif de réglage de la vitesse de rotation lors d'un changement de vitesse à la valeur dépendant du saut de vitesse.

FIG. 1

EP 0 189 050 B1

Kupplungsstellweg

FIG. 2